# EUROPEAN PATENT SPECIFICATION

(11) **EP 1 044 596 B1**
(45) Date of publication and mention of the grant of the patent: **25.07.2007**
(21) Application number: 00200821.7
(22) Date of filing: 09.03.2000
(51) Int. Cl.: A01D 75/18, A01F 29/16, A01D 41/12

(54) **Alarm system for agricultural equipment**
Alarmsystem für landwirtschaftliche Maschinen
Système d'alarme pour équipement agricole

(30) Priority: 12.04.1999 GB 9908142
(43) Date of publication of application: 18.10.2000
(73) Proprietor: CNH Belgium N.V., 8210 Zedelgem (BE)
(72) Inventor: Paquet, Bert J. F., 8200 Sint-Andries (BE)
(74) Representative: Vandenbroucke, Alberic

(56) References cited:
- GB-A- 770 931
- US-A- 4 531 118
- US-A- 4 933 852
- US-A- 5 083 976
- US-A- 5 855 108
- "Alarm standard aims to strike the right note" NEW SCIENTIST, vol. 8, January 1987 (1987-01), page 40 XP001026402

## Description

The present invention relates to an alarm system for agricultural equipment according to the preamble of claim 1 and is particularly applicable to combine harvesters.

In older combine harvesters (combines for short), the driver or operator of the combine would sit out in the open and would be able to hear directly if certain faults developed. There was consequently no need to generate an audible alarm because the fault condition would itself generate a noise. Furthermore, the noises produced by the different faults were often characteristic of the fault and from hearing the noise alone the driver could determine the nature of the fault that had developed.

In more modern combines, the operator sits in a cab and is isolated from his environment. While this provides improved safety and comfort for the operator it does also mean that the operator is not as closely in touch with the operation of the combine and may not realize when a fault has developed. For this reason, it is necessary to provide various warnings in the cab to advise the operator of malfunctions.

The complexity of a combine means that there are many possible malfunctions that need to be brought to the attention of the operator. With all the dials and controls present on the cab console it can be very confusing and disconcerting for an operator to hear only a beep or to see a flashing light and to try to determine the exact nature of the malfunction. For example, the alarm system described in GB-A-770 931, has only one horn for signalling an excessive accumulation of crop material above the straw walkers, the cleaning sieves or the straw baling press.

In order to determine the exact nature of the malfunction he has to turn to the console to see what light is flashing or what warning message is displayed on a screen. Meanwhile his attention is diverted from his ongoing task of steering the combine and positioning the crop-collecting header in front of the combine. A momentary loss of attention may suffice to miss a stretch of the standing crop or to push the header into the ground.

Similar problems also occur in modern tractor-implement combinations, where the operator is shielded from the surrounding noise by a cab and he is informed about the status of the pulled implement by a monitor which is installed in the cab. Here also it is the prime task of the operator to steer the implement correctly over the field and he should not unnecessarily be diverted from this steering action to check the nature of any malfunction on the monitor.

With a view to mitigating the foregoing disadvantage, the present invention provides agricultural equipment having an alarm system operative in the event of detection of a malfunction to emit an audible alarm signal that is characteristic of the malfunction and associated by the vehicle operator with the malfunction, characterised in that:
the audible alarm signal is generated by picking up and relaying the sound generated by the malfunction to the vehicle operator; or
the audible alarm signal is synthesized to be reminiscent of the sound that one would associate with the malfunction.

In this manner the operator can remain concentrated on the field in front of the equipment and the operation of the components outside the cab. He does not have to turn to the console to know the nature of the malfunction and can keep on working efficiently, such that an important source of fatigue is avoided.

It is already known from other industries that spoken messages may be generated when certain fault conditions occur. However such messages are not always understood by all possible operators. The audible alarm system according to the invention avoids the need for a new set of alarm messages for each new foreign language when the equipment is sold in another country. A typical agricultural machine may be sold in a geographical area where over fifteen different languages are used. The prior art systems then would require the translation of the alarm messages in the same number of languages and the loading of the translated text into the memory of the systems. Such translations would also be required where spoken messages are used to warn the operator.

The use of the differentiated, audible alarms accelerates the learning process for new operators.

The sound generation concept will be clear from the various possibilities that are set out below but a typical example would be a frequency modulated whine to indicate loss of drive to a shaft, for example through a slipping or broken drive belt.

Various parameters of the audible alarm can be modified to provide the operator with additional information. For example, if the sound is generated in the cab by a stereo system, the relative amplitude from the left and right sides of the cab can be used to indicate the position of the malfunction. Furthermore, the amplitude of the sound can be varied to indicate the severity of the alarm condition.

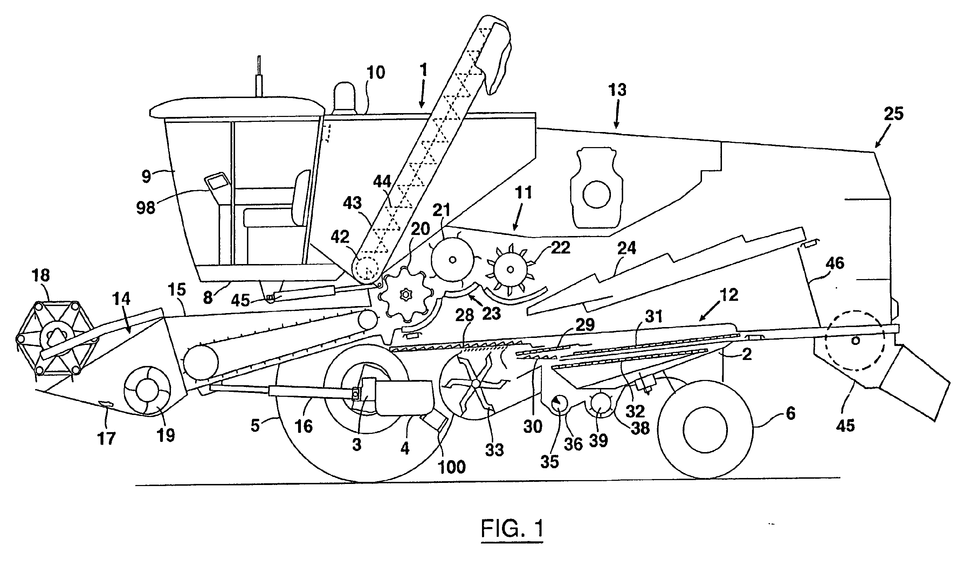

The invention will now be described further, by way of example, with reference to the accompanying drawing which is a schematic side view of a combine harvester.

While the invention can be applied to any agricultural vehicle or combination of a vehicle and agricultural implement, it will be described herein by reference to a combine harvester. To understand the background of the invention, such a combine will first be described briefly though its construction and operation is known in itself.

The illustrated self-propelled combine 1 has large front drive wheels 5 and smaller steerable rear wheels 6. Power for travelling and for the crop processing functions is provided by an engine 13 on top of the combine. The combine is provided with a header 14, which is detachably mounted to the housing of a straw elevator 15. This housing can be moved up and down about a transverse axis below and behind the steering platform 8 which supports the combine cab 9. The cab contains the driver's seat and a console 98 with a display for monitoring the various harvester functions.

For harvesting operations, the straw elevator 15 is moved downwardly until the transverse sickle bar 17 floats slightly above ground level. The sickle bar comprises a set of side-by-side arranged triangular knife sections which are reciprocated in a transverse direction. The cutting edges of the knives cooperate with stationary knife fingers to cut the crop stems loose from their roots as the machine travels over the field. Meanwhile a transverse header reel 18 is rotated to guide the cut stems to the rear of the header and within reach of a transverse auger 19. This auger has two opposite flight sections which convey the cut crop to the center of the header, which registers with the mouth of the straw elevator housing. At this stage the crop material comprises the stems and the ears with the grain kernels.

The straw elevator 15 comprises a set of four chains which at regular intervals are interconnected by transverse angled profiles. The profiles grab the material delivered by the auger 19 to the mouth of the elevator housing and convey it upwardly and rearwardly to the threshing mechanism 11. The material is impacted by a threshing drum 20 which co-operates with a concave 23 to loosen the grain kernels from the ears. The concave consists of transverse sections of flat steel through which extend perpendicularly thick steel wires, thus forming a grid retaining the straw, but allowing the kernels to pass through. The threshing action follows mainly from the interaction of the slats of the threshing drum with the edges of the flat steel sections of the concave 23. When the concave is properly adjusted to the path of the drum slats, most of the grain kernels are beaten out of the ears by this first drum 20.

The material which reaches the rear end of the concave 23 consists of a mixture of straw (the crop stems), ears, kernels and small crop particles (termed chaff) . In order to prevent further rotation of the material by and around the threshing drum 20, the material is taken off from the circumference of the drum by the flights of the beater drum 21. A further concave is installed below the drum for allowing loosened grain kernels to fall to the cleaning mechanism 12 below. The beater drum 21 delivers the mixture of crop material rearwardly to a rotary separator 22. This rotor has outwardly extending teeth which tear apart the mixture, thereby braking up the layer of material delivered by the beater drum 21. Also the rotary separator has a concave below, permitting the further deposit of grain on the cleaning mechanism 12.

The material from the rotary separator is deposited onto the front end of the straw walkers 24. The five or six straw walkers 24 are mounted on crank sections of two transverse axles. These crank sections are phased such that upon rotation of the axles the straw walkers move in circular patterns. Each straw walker moves rearwardly in the upper part of the pattern and downwardly in the lower part. The phasing assures that a forwardly moving straw walker lies between upwardly and rearwardly moving straw walkers. In this manner the long stems in the threshed crop material are moved to the rear of the combine. The straw is engaged by the teeth on the side sections of the straw walkers during their upward and rearward travel. The straw walkers 24 loosen the material such that the kernels can fall from between the straw material. On their upper surface the walkers have grid sections permitting the kernels to drop through. These kernels are received in the trough-like bottom sections of the straw walkers and slide therealong to the front end of the walkers, from where they drop on the cleaning mechanism 12. Meanwhile the straw is moved over the straw walkers to the rear end of the combine underneath the straw hood 25, from where it is allowed to fall onto the field. Alternatively the straw may be guided by a guide plate 46 into a rotary straw chopper 45 which comminutes the straw and ejects its in a wide pattern onto the field.

The threshing drum 20 and its concave 23 are usually referred to as the threshing mechanism, i.e. the device performing the most vigorous action on the crop material. The rotary separator 22 and the straw walkers 24 constitute the separating mechanism, i.e. the device effecting the separation of the threshed grain kernels from the straw.

The material which is deposited on the cleaning mechanism not only consists of grain kernels, but also of other small particles of crop material, broken or unbroken ears, short straw and chaff.

The bulk of the material that comes from the threshing mechanism, is deposited onto a corrugated grain pan 28. This plate is oscillated to convey the material rearwardly while leveling the same. During their rearward movement the kernels have a tendency to migrate below the lighter remainder of the crop material and to concentrate near the bottom of the grain pan 28. An even layer of crop material falls from the grain pan 28 onto a pre-cleaning sieve 29. This is a first adjustable sieve. During its fall from the grain pan to the sieve 29 the material is engaged by an air flow from the fan 33 such that the lighter particles are blown rearwardly. The same fan arrangement provides an air flow through the pre-cleaning sieves 29 and the subsequent sieves 31, 32 for blowing the light material travelling thereover rearwardly and out of the combine 1.

The material which falls through the pre-cleaning sieve 29 (mostly grain kernels), is received on a small grain pan 30 which guides it to the lower sieve 32. This lower sieve is the grain sieve, which is adjusted to let pass only grain kernels. Above the grain sieve 32, there is a chaffer sieve 31, which receives most of the material delivered by the pre-cleaning sieve 29 and the bottoms of the straw walkers 24. This upper sieve is set to a larger aperture than the grain sieve 32 below. Material falling through a properly adjusted grain sieve 32 will contain nothing more than grain kernels. They fall onto a clean grain chute which guides them forwardly to a transverse auger trough 36. A clean grain auger 35 pushes the grain sideways to a clean grain elevator (not shown) on the right hand side of the combine. At the height of the grain tank 10, the elevator delivers the grain kernels to a bubble-up auger (also not shown) which deposits the grain on top of the grain already delivered into the grain tank.

As to the material travelling over the chaffer sieve 31, larger crop particles are conveyed out of the combine and deposited onto the field, with or without the assistance of the air flow from the fan 33. Alternatively the debris from the sieve 31 may be collected into a chaff spreader (not shown) which is installed behind and below the rear end of the chaffer sieve 31. This spreader distributes the material in an even pattern onto the field, thereby preventing an accumulation of debris in the area corresponding to the width of the combine 1 only.

Crop material which passed through the upper sieve 31, but which could not pass through the grain sieve 32 finally falls onto a second chute. This material contains inter alia incompletely threshed ears, the tailings, which still contain unthreshed grain kernels. The second chute guides the material forwardly to a tailings auger trough 38. A transverse tailings auger conveys the tailings sideways to rotary rethreshers 39 on each side of the combine, each rethresher comprising a toothed rotor cooperating with stationary teeth attached to the rotor housing. Tailings or return elevators (not shown) along the sides of the cleaning mechanism 12 lift up the rethreshed return material and convey it upwardly and forwardly along the side of the combine. Each elevator has at its top end a pair of wings which eject the material onto the grain pan 28, where it is mixed with the crop material coming from the concaves 23.

The complete cleaning mechanism 12 advantageously is mounted to a subframe (not shown) which is mounted for pivotment about a horizontal transverse axis to the main frame 2 of the combine 1. Such arrangement is described in full detail in GB-A-2.052.238. An electrical actuator (also not shown) having one end attached to the main frame and the other to the subframe enables the leveling of the cleaning mechanism when the combine is traveled along slopes. In this manner the grain pan 28 and the sieves 29, 31, 32 can be kept horizontal such that the cleaning capacity of the mechanism 12 is not adversely affected by the elevations of the field.

When the grain tank 10 is full, it can be emptied by means of grain tank auger 42 installed at the bottom of the grain tank, and an unloading tube 43 which can be swung out by a hydraulic cylinder 45 with its end above a wagon which travels next to the combine 1. The grain is unloaded by the rotation of an unloading auger 44 inside the tube 43.

The present invention is concerned with warning the operator of the combine of malfunctions within a complex environment such as described above and aim to provide warnings that are self-explanatory. This is achieved by making the alarm signals audible and by making the emitted sounds reminiscent of the malfunction that gave rise to the alarm condition. These signals are neither verbal nor musical.

Known combines have various shaft status monitors that monitor the speed of rotation of the various drive shafts and simply produce a beep or a buzzer sound when the associated shaft speed drops below a certain threshold. Such shaft status monitors may either be implemented in hardware or in software. The invention is not concerned with the manner in which malfunctions are detected but in the alarm sounds that are generated to bring the malfunction to the attention of the operator.

The following table provides examples of sounds that will be understood intuitively.

| **Condition** | **Sound** |
|---|---|
| SSM (Shaft Speed Monitor) of straw walkers | Slowing down slipping belt coupled with the sound of shaking straw |
| SSM of rotary separator, beater or drum | Slowing down slipping belt with the sound of the thresher |
| SSM right return elevator | Slowing down slipping belt or rattle from right speaker |
| SSM left return elevator | Slowing down slipping belt or rattle from left speaker |
| SSM grain elevator | Slowing down slipping belt coupled with the sound of grain pouring into the grain tank |
| SSM fan | Slowing down slipping belt with the sound of a fan |
| SSM left or right chopper | Slowing down slipping belt coupled with the rinkling of a stopping chopper coming from the left of right speaker |
| Straw walker overload | Sound of baling |
| Overheating engine | Sound of a steaming radiator |
| Low battery voltage | Sound of an engine being cranked slowly |
| Low engine oil pressure | Sound of oil leaking into an oil pan |
| Parking brake ON or low brake fluid level | Sound of screeching brakes |
| Blocking self leveling cleaning shoe | Sound of a blocking actuator |
| Unloading auger open while driving | Intermittent sound of engaged unloading auger |
| Air filter pressure | Sound of a clogged vacuum cleaner |
| Grain tank nearly full | Sound of engaged unloading auger |
| Grain tank full | Sound of grain pouring into a bin or on the roof |
| Air conditioning too high or too low | Sound of a freezer compressor |
| Engine at maximum power limit | Sound of a stalling engine |
| Grain loss level too high | Sound of kernels falling on a plate, the rate increasing with the loss level. |

In the case of all the faults listed in the table, it is possible to generate sounds that intuitively indicate to the operator the nature of the malfunction. In certain other cases, for example in relation to the shaft speed monitor of the chaff spreader, where there is no sound that is naturally associated with the fault condition, it is possible to generate a strong beep and it is not essential that all the alarm sounds should be naturally associated with the related fault condition.

As can be seen from the table, sounds can be mixed. Thus, the sound of a slowing belt can be mixed with the sound of a threshing mechanism 20, 23 to indicate that there is a fault indication from a shaft speed monitor associated with part of the threshing mechanism.

Using a stereo audio system, it is possible to provide directional information so that where there are duplicated items of equipment on the opposite sides of the vehicle, the direction of the alarm sound can indicate the side of the vehicle on which a malfunction has occurred.

The amplitude of the alarm signal can if desired be varied to indicate the urgency or severity of the alarm condition and the importance that the operator should attach to the warning.

The various alarm sounds can be synthesized but most simply they can be recorded from a machine and processed electronically to achieve the desired sound.

It will be clear that the invention can be applied to agricultural equipment other than combine harvesters and that the table given above does not contain an exhaustive list of sounds associated with fault conditions occurring in agricultural vehicles.

## Claims

1. Agricultural equipment (1) having an alarm system operative in the event of detection of a malfunction to emit an audible alarm signal, characteristic of the malfunction and associated by the vehicle operator with the malfunction,
**characterised in that**:
the audible alarm signal is generated by picking up and relaying the sound generated by the malfunction to the vehicle operator, or
the audible alarm signal is synthesized to be reminiscent of the sound that one would associate with the malfunction.

2. Agricultural equipment according to claim 1, **characterized in that** said signal is non-verbal and non-musical.

3. Agricultural equipment according to any of the preceding claims, **characterized in that** the audible alarm signal is a mixed signal, part of alarm signal indicating the nature of the malfunction and the other the origin of the sound.

4. Agricultural equipment according to any of the preceding claims, **characterized in that** the alarm signal is generated in stereo and the direction of the sound is indicative of the side of the vehicle on which a malfunction has occurred.

5. Agricultural equipment according to any of the preceding claims, **characterized in that** the various alarm signals generated by the alarm system are of different amplitude, the loudness of an alarm sound indicating the urgency or severity of the alarm condition.

## Patentansprüche

1. Landwirtschaftliche Ausrüstung (1) mit einem Alarmsystem, das im Fall der Feststellung einer Fehlfunktion betreibbar ist, um ein akustisches Alarmsignal abzugeben, das für die Fehlfunktion charakteristisch ist und von dem Fahrzeug-Fahrer der Fehlfunktion zugeordnet wird,
**dadurch gekennzeichnet, dass**:
das akustische Alarmsignal durch Auffangen und Weiterleiten des Klanges, der von der Fehlfunktion erzeugt wird, an den Fahrzeug-Fahrer erzeugt wird, oder
das akustische Alarmsignal synthetisiert wird, um an den Klang zu erinnern, den man der Fehlfunktion zuordnen würde.

2. Landwirtschaftliche Ausrüstung nach Anspruch 1,
**dadurch gekennzeichnet, dass** das Signal nicht-verbal und nicht-musikalisch ist.

3. Landwirtschaftliche Ausrüstung nach einem der vorhergehenden Ansprüche, **dadurch gekennzeichnet, dass** das akustische Alarmsignal ein gemischtes Signal ist, wobei ein Teil des Alarmsignals die Art der Fehlfunktion und der andere Teil den Ursprung des Klanges anzeigt.

4. Landwirtschaftliche Ausrüstung nach einem der vorhergehenden Ansprüche, **dadurch gekennzeichnet, dass** das Alarmsignal in Stereo erzeugt wird, und dass die Richtung des Klanges die Seite des Fahrzeuges anzeigt, auf der eine Fehlfunktion aufgetreten ist.

5. Landwirtschaftliche Ausrüstung nach einem der vorhergehenden Ansprüche, **dadurch gekennzeichnet, dass** die verschiedenen Alarmsignale, die von dem Alarmsystem erzeugt werden, eine unterschiedliche Amplitude aufweisen, wobei die Lautstärke eines Alarmklanges die Dringlichkeit oder die schwerwiegende Eigenart des Alarmzustandes anzeigt.

## Revendications

1. Matériel agricole (1) doté d'un système d'alarme qui s'active en cas de détection d'un dysfonctionnement pour émettre un signal d'alarme audible caractéristique du dysfonctionnement et associé au dysfonctionnement par l'opérateur du véhicule,
**caractérisé en ce que** :
le signal d'alarme audible est généré en reprenant le bruit produit par le dysfonctionnement et en le relayant à l'opérateur du véhicule ; ou
le signal d'alarme audible est synthétisé de manière à rappeler le bruit que l'on associerait au dysfonctionnement.

2. Matériel agricole suivant la revendication 1, **caractérisé en ce que** ledit signal n'est ni verbal ni musical.

3. Matériel agricole suivant l'une quelconque des revendications précédentes, **caractérisé en ce que** le signal d'alarme audible est un signal combiné, une partie du signal d'alarme indiquant la nature du dysfonctionnement et l'autre l'origine du bruit.

4. Matériel agricole suivant l'une quelconque des revendications précédentes, **caractérisé en ce que** le signal d'alarme est généré en stéréo, la direction du bruit indiquant le côté du véhicule sur lequel un dysfonctionnement s'est produit.

5. Matériel agricole suivant l'une quelconque des revendications précédentes, **caractérisé en ce que** les différents signaux d'alarme créés par le système d'alarme sont d'une amplitude différente, l'intensité sonore du signal d'alarme indiquant l'urgence ou la gravité de l'état d'alarme.
